# EUROPEAN PATENT APPLICATION

(11) **EP 1 981 184 A2**
(43) Date of publication of application: **15.10.2008**
(21) Application number: 08152854.9
(22) Date of filing: 17.03.2008
(51) Int. Cl.: H04B 10/17

(54) **Apparatus and method of optical gain compensation for submarine optical cable**

(30) Priority: 10.04.2007 CN 200710065287
(71) Applicant: Huawei Technologies Co., Ltd., Longgang District, Shenzhen, Guangdong 518129 (CN)
(72) Inventor: Lu, Yiquan c/o c/o Huawei Technologies Co., Ltd., 518129, Shenzhen Guangdong (CN); Li, Congqi c/o c/o Huawei Technologies Co., Ltd., 518129, Shenzhen Guangdong (CN); Li, Shanfeng c/o c/o Huawei Technologies Co., Ltd., 518129, Shenzhen Guangdong (CN)
(74) Representative: Körber, Martin Hans

(57) **Abstract**

The present invention provides an apparatus and method of optical compensation for a submarine optical cable optical. The apparatus includes a dummy light module configured to generate a dummy light signal according to a continuous spectrum in a predetermined range means for filtering this signal by demultiplexing or wavelength blocking, and a combining module configured to combine a service signal with the dummy light signal. By applying the present invention, when dummy light is used for the compensation, the conventional problems are solved, which include complicated control, difficult realization of the pre-equalization function and inflexible configuration. When service signals are increased, the adjustment for the power of the dummy light signal is avoided; therefore, the control for the dummy light is simplified. In the pre-equalization operation, power control is only performed on the dummy light signal in the single channel or the continuous dummy light signal; therefore, the realization of the pre-equalization function is easy.

## Description

### Field of the Invention

The present invention relates to optical transmission technologies, and more particularly, to an apparatus and method of optical compensation for a submarine optical cable.

### Background of the Invention

Along with the rapid development of information technologies, submarine optical cables bearing important international communication services have covered large sea areas on the earth. Submarine optical systems are usually divided into two categories: short distance systems without relay, and medium and long distance systems with relay. Equipment in the medium and long distance system includes Network Protection Equipment (NPE), Submarine Line Terminal Equipment (SLTE), Power Feeding Equipment (PFE), Line Monitoring Equipment (LME), optical amplifier for submarine transmission (repeater), and submarine optical cables etc. There is usually an Er-Dropped Fiber Amplifier (EDFA) in the repeater.

The repeater in the submarine optical system usually works in an Automatic Current Control (ACC) mode or an Automatic Power Control (APC) mode. When an EDFA works in the ACC or APC mode, different input optical power results in different gain flatness. Therefore, input optical power of submarine optical amplifiers needs to be locked in a narrow range to obtain excellent gain flatness.

The submarine optical system includes a plurality of channels, and optical signals having different wavelengths are transmitted in the different channels. When a channel is used for transmitting a service signal, a wavelength corresponding to the channel is referred to as a service wavelength, i.e. the channel is used for transmitting the optical signal having the service wavelength. For the purpose of keeping the repeater working in the stable ACC or APC mode, when the service wavelength of the submarine optical system is not fully loaded, one or more channels without services may be used as dummy light channels. Optical signals are input to the dummy light channels, and optical power to be input to the repeater is increased into a required input power range. Wavelengths corresponding to the dummy light channels are usually referred to as dummy light wavelengths, and the optical signals transmitted over the dummy light channels which have the dummy light wavelengths are referred to as dummy light signals.

For ensuring that input optical power of the submarine optical amplifier meets design requirements, conventional optical compensation is performed by using dummy light signals having dummy light wavelengths, and the dummy light signals are output by one or a few lasers.

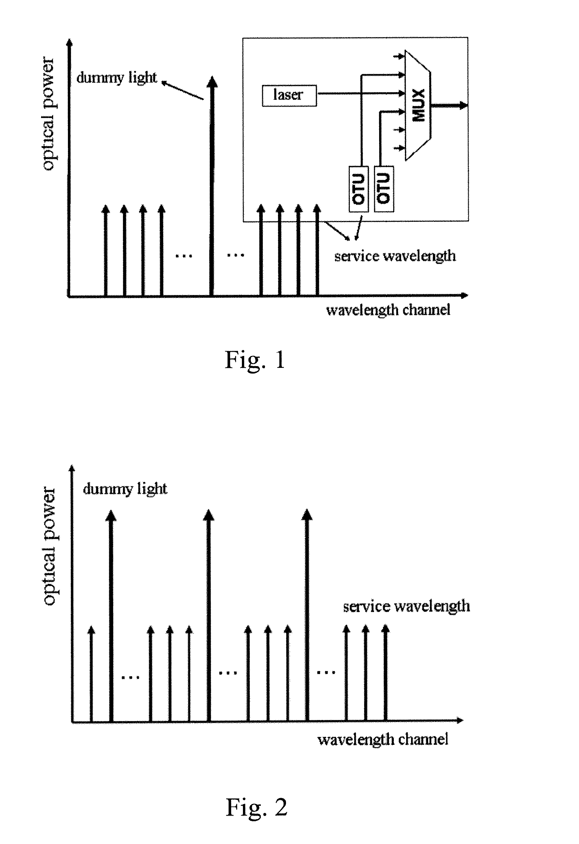

As shown in Figure 1, optical compensation is performed by using a high power dummy light signal output by a laser. According to the input optical power requirements of the submarine optical amplifier, when total optical power of service signals output by Optical Transponder Units (OTUs) fails to meet the design input optical power requirements of the submarine optical amplifier, optical power of a dummy light signal generated by a laser in a single channel is used to compensate for the optical power to meet the input optical power requirements of the submarine optical amplifier. And the service signals and the dummy light signal are combined by an optical Multiplexer (MUX) for outputting to a submarine optical cable. Thus the optical power of the dummy light signal is usually much higher than that of the service signals. Along with the increase of the service signals, the optical power of the dummy light signal is gradually reduced correspondingly to ensure that the input optical power of the submarine optical amplifier meets the requirements.

As shown in Figure 2, optical compensation is performed by simultaneously using three dummy light signals having different wavelengths, and the dummy light signals are output by three lasers. When the service signals are increased, the optical power of the dummy light signals, i.e. the optical power of the three optical signals having the different wavelengths is adjusted simultaneously to ensure that the input optical power of the submarine optical amplifier meets the requirements.

In the conventional optical compensation, only the optical signal having one wavelength or the optical signals having a few wavelengths are used as the dummy light signals. When the service signals are increased, the optical power of the dummy light signals needs to be adjusted, and the control of the adjustment is rather complicated.

Because the transmission distance of the submarine system is usually very long, such as 6,000 kilometers for crossing over Atlantic and 12,000 kilometers for crossing over Pacific Ocean. It is necessary for the submarine system to have a pre-equalization function for optical power. Because only the optical signals having one wavelength or the optical signals having a few wavelengths are used as the dummy light signals, realization of the pre-equalization function for the submarine system is difficult.

In addition, the optical power of the dummy light signals is high. When the wavelengths are configured, it is necessary to consider influences of nonlinear effect on the system; therefore, the configuration of the wavelengths is inflexible.

### Summary of the Invention

Embodiments of the present invention provide an apparatus and a method of optical compensation for a submarine optical cable to solve the conventional problems when dummy light is used for the compensation. The conventional problems include complicated control, difficult realization of the pre-equalization function and inflexible configuration.

An apparatus of optical compensation for a submarine optical cable includes:
a dummy light module, configured to generate a dummy light signal according to a continuous spectrum in a predetermined range; and
a combining module, configured to combine a service signal with the dummy light signal.

A method of optical compensation for a submarine optical cable includes:
generating a dummy light signal according to a continuous spectrum in a predetermined range; and
combining a service signal with the dummy light signal.

In embodiments of the present invention, optical compensation is performed by using a channelized dummy light signal generated according to a continuous spectrum or a continuous dummy light signal generated by blocking wavelengths corresponding to service signals. When the service signals are increased, the adjustment for the power of the dummy light signal is avoided; therefore, the control for the dummy light is simplified. In the pre-equalization operation, power control is only performed on the dummy light signal in the single channel or the continuous dummy light signal; therefore, the realization of the pre-equalization function is easy.

In addition, the optical power of the dummy light signal in the single channel or the continuous dummy light signal is correspondingly low, the system is not influenced by the nonlinear effect; therefore, the configuration of the wavelengths is flexible.

### Brief Description of the Drawings

Figure 1 is a schematic diagram illustrating a conventional optical compensation by using one dummy light signal;
Figure 2 is a schematic diagram illustrating a conventional optical compensation by using three dummy light signals having different wavelengths;
Figure 3 is a schematic diagram illustrating a structure of an apparatus of optical compensation for a submarine optical cable according to a first embodiment of the present invention;
Figure 4 is a flowchart illustrating a method of optical compensation for a submarine optical cable according to a second embodiment of the present invention;
Figure 5 is a schematic diagram illustrating a structure of an apparatus of optical compensation for a submarine optical cable according to a third embodiment of the present invention;
Figure 6 is a schematic diagram illustrating an application of a method of optical compensation for a submarine optical cable according to a fourth embodiment of the present invention;
Figure 7a is a schematic diagram illustrating a structure of an apparatus of optical compensation for a submarine optical cable according to a fifth embodiment of the present invention;
Figure 7b is a schematic diagram illustrating another structure of an apparatus of optical compensation for a submarine optical cable according to the fifth embodiment of the present invention;
Figure 8 is a schematic diagram illustrating a structure of an apparatus of optical compensation for a submarine optical cable according to a sixth embodiment of the present invention;
Figure 9 is a schematic diagram illustrating a structure of an apparatus of optical compensation for a submarine optical cable according to a seventh embodiment of the present invention;
Figure 10 is a schematic diagram illustrating a structure of an apparatus of optical compensation for a submarine optical cable according to an eighth embodiment of the present invention;
Figure 11 is a schematic diagram illustrating an application of a method of optical compensation for a submarine optical cable according to a ninth embodiment of the present invention;
Figure 12 is a schematic diagram illustrating a structure of an apparatus of optical compensation for a submarine optical cable according to a tenth embodiment of the present invention;
Figure 13 is a schematic diagram illustrating a spectrum of ASE noise light output by an Optical Amplifier (OA) in Figure 9;
Figure 14 is a schematic diagram illustrating an application of a method of optical compensation for a submarine optical cable according to an eleventh embodiment of the present invention;
Figure 15 is a schematic diagram illustrating a structure of an apparatus of optical compensation for a submarine optical cable according to a twelfth embodiment of the present invention; and
Figure 16 is a schematic diagram illustrating a structure of an apparatus of optical compensation for a submarine optical cable according to a thirteen embodiment of the present invention.

### Detailed Description of the Invention

Embodiments of the present invention are now made to the following description taken in conjunction with the accompanying drawings. But the present invention is not limited to the embodiments as follows.

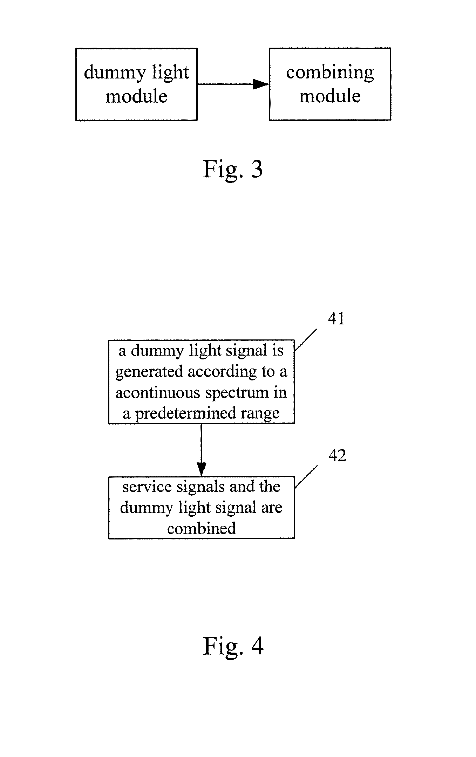

Figure 3 is a schematic illustrating a structure of an apparatus of optical compensation for a submarine optical cable according to a first embodiment of the present invention. As shown in Figure 3, an apparatus of optical compensation for a submarine optical cable provided by the present invention includes a dummy light module and a combining module.

The dummy light module is configured to generate a dummy light signal according to a continuous spectrum.

The combining module is configured to combine a service signal with the dummy light signal generated by the dummy light module.

The combining module performs optical compensation for the service signal by combining the service signal with the dummy light signal.

Figure 4 is a flowchart illustrating a method of optical compensation for a submarine optical cable according to a second embodiment of the present invention. As shown in Figure 4, the method of optical compensation for a submarine optical cable includes the following processes.

At block 41, a dummy light signal is generated according to a continuous spectrum in a predetermined range.

In the embodiment of the present invention, the continuous spectrum in the predetermined range may be filtered to generate a channelized dummy light signal, or a wavelength corresponding to a service signal in the continuous spectrum in the predetermined range may be blocked to generate a continuous dummy light signal.

When the channelized dummy light signal is generated, the channel corresponding to the dummy light signal may be different from the channel corresponding to the service signal after the filtration is performed; or the number of dummy light signals may correspond to the number of channels in a system and then the dummy light signals be selected by the combining module.

In addition, in the embodiment of the present invention, the continuous spectrum in the predetermined range may be a C waveband spectrum, such as optical signals whose wavelengths are in a range of 1525 nm to 1565 nm.

At block 42, the service signal and the dummy light signal are combined.

If the wavelength of the channelized dummy light signal is out of band, the service signal and the dummy light signal are combined; If the wavelength of the channelized dummy light signal is fully loaded, the dummy light signals are selected, and the wavelengths of the selected dummy light signals are complementary to those of the service signals, and the service signals are combined with the selected dummy light signals.

It can be seen that in the embodiment of the present invention, the optical compensation is performed by using the channelized dummy light signal generated according to the continuous spectrum or by using the continuous dummy light signal generated by blocking wavelengths corresponding to the service signals. When service signals are increased, the adjustment for the power of the dummy light signal is avoided; therefore, the control for the dummy light is simplified. In the pre-equalization operation, power control is performed on the dummy light signal in the single channel or the continuous dummy light signal; therefore, the realization of the pre-equalization function is easy. In addition, the optical power of the dummy light signal in a single channel or the continuous dummy light signal is correspondingly low, the system is not influenced by the nonlinear effect; therefore, the configuration of the wavelengths is flexible.

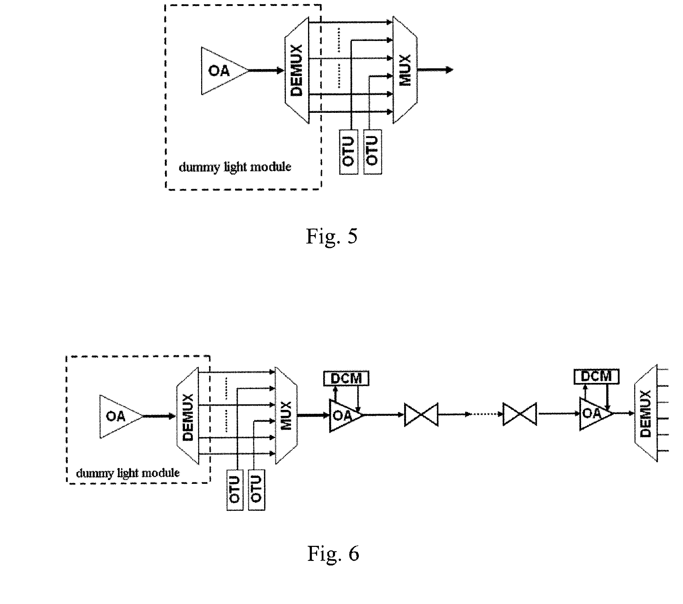

Figure 5 is a schematic illustrating a structure of an apparatus of optical compensation for a submarine optical cable according to a third embodiment of the present invention. In the embodiment, the dummy light module includes a continuous spectrum generating unit and a filtering unit. The continuous spectrum generating unit is an Optical Amplifier (OA), the filtering unit is an optical De-multiplexer (DEMUX), and the combining module is an MUX.

As shown in Figure 5, the apparatus in the embodiment is described below.

The OA is configured to output Amplified Spontaneous Emission (ASE) noise light when an EDFA is pumped without any input, i.e. generate an optical signal working in the C waveband as the continuous spectrum.

The DEMUX is configured to filter the ASE noise light output by the OA, and select a channel without the service signal as a dummy light channel. In this way, the ASE noise light is split into channelized dummy light.

The MUX is configured to combine the service signal output by an OTU with the dummy light signal generated by the DEMUX.

The DEMUX may take all channels without the service signal as the dummy light channels. When one new service signal is added, one service channel is added, and thus one dummy light channel is correspondingly taken away. Therefore, all the channels bear the optical signals having the wavelengths corresponding to the channels. As shown in Figure 4, suppose that there are 40 channels altogether in the DEMUX, and there are 5 channels bearing the service signals output by the OTU, then the other 35 channels are the dummy light channels output by the DEMUX after the filtering the ASE noise light. After multiplexed by the MUX, the service signal and the dummy light signal are output directly to a submarine optical cable or output to the submarine optical cable after such processing as amplification. When one service signal is newly added, one dummy light channel is taken away from the DEMUX, and then 34 dummy light channels are output; when 5 service signals are newly added, i.e. the number of the channels needed by the service signals is 10, then 30 dummy light channels are output by the DEMUX.

It can be seen that in the embodiment of the present invention, the channels without service signals are taken as the dummy light channels, and the dummy light power is adjusted by controlling the number of the dummy light channels; therefore, control of the dummy light signal is simplified.

In the embodiment of the present invention, not all the channels have to bear the optical signal of the corresponding wavelength. For example, in the embodiment shown in Figure 5, when 5 channels bear the service signals output by the OTUs, other 34 or 33 channels may be taken as the dummy light channels, and the application of the present invention is not influenced.

A description of a method of optical compensation for a submarine optical cable in the present invention is given below according to the apparatus of optical compensation for a submarine optical cable shown in Figure 5.

Figure 6 is a schematic diagram illustrating an application of the method of optical compensation for a submarine optical cable according to a fourth embodiment of the present invention. In the embodiment, the continuous spectrum in the predetermined range is filtered to generate a channelized dummy light signal.

As shown in Figure 6, the ASE noise light generated by using forced luminescence of the OA is output to the DEMUX; and the DEMUX includes Arrayed Waveguide Grating (AWG) of 40 waves and outputs a plurality of dummy light signals after filtering the ASE noise light. The MUX combines the service signals output by the OTUs with the dummy light signals output by the DEMUX, and outputs the combined optical signals to a receiving end via the submarine optical cable.

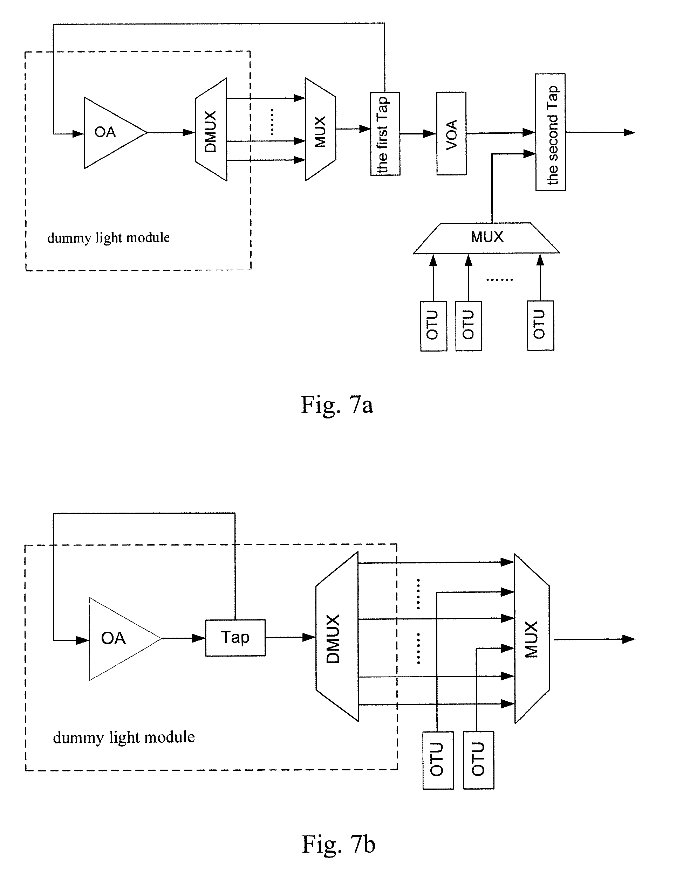

Figure 7a is a schematic diagram illustrating a structure of an apparatus of optical compensation for a submarine optical cable according to a fifth embodiment of the present invention. In the embodiment, for the purpose of promoting energy efficiency and power stability when the continuous light outputting from an ASE source passes through the DEMUX and the MUX. The DEMUX and the MUX are used for choosing the complementary dummy light signals compared with the service signals. On the basis of the embodiment shown in Figure 5, the apparatus further includes an optical splitter (the first Tap) as a feedback unit for performing positive feedback and feeding back a predetermined part in the dummy light signal to the ASE source. A Variable Optical Attenuator (VOA) is adapted for controlling optical power of the wavelength complementary dummy light signal. Additionally, the service signals are multiplied by an MUX, and then the multiplied service signals and the dummy light signal output by the first Tap are combined by a coupler (the second Tap).

As shown in Figure 7a, suppose the first Tap splits the optical signal according to a ratio of 10 to 90, i.e. 10% of the optical signal output by the MUX is sent to the OA as input of the OA. Therefore, a syntonic cavity is formed, and then the spectrum output by the OA is no longer a continuous broadband spectrum but a channelized dummy light signal; therefore, the energy loss when the ASE noise light output by the OA passes through the DEMUX is reduced.

Figure 7b is a schematic diagram illustrating another structure of an apparatus of optical compensation for a submarine optical cable according to a fifth embodiment of the present invention. In the embodiment, the Tap used as the feedback unit is adapted for controlling the output power stability. Compared with Figure 7a, no MUX and DMUX is used in the feedback loop. But a DMUX and an MUX are attached to the dummy light module, and the DMUX and the MUX are used for choosing the complementary wavelengths comparing with the service signals. And then the service signals are combined with the chosen dummy light signals at the MUX to generate a total output. Obviously, the embodiment can save a VOA and an MUX compared with the embodiment shown in Figure 7a.

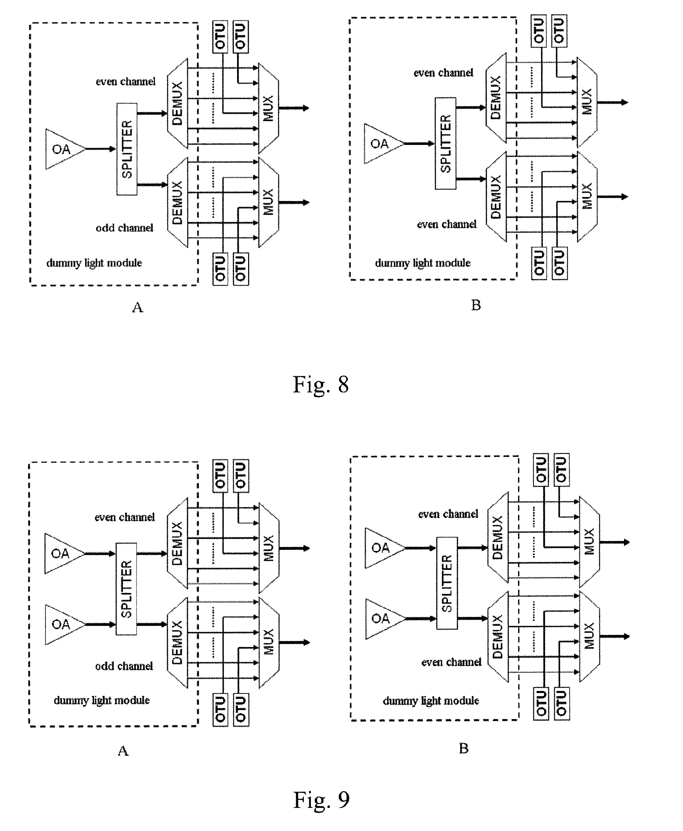

Figure 8 is a schematic diagram illustrating a structure of an apparatus of optical compensation for a submarine optical cable according to a sixth embodiment of the present invention. In the embodiment, there are two filtering units, DEMUXs, and the apparatus further includes an optical splitter (SPLITTER) as a splitting unit.

The SPLITTER is configured to split the ASE noise light output by the OA into two paths which are output to the two DEMUX respectively.

As shown in Figure 8, the SPLITTER is added between the OA and the DEMUX according to Figure 5, and the SPLITTER connects to the two DEMUXs at the same time. Therefore, double channels of dummy light are generated in contrast to the case that one DEMUX is used in Figure 5. Suppose one DEMUX is capable of generating 40 wavelengths with a 100GHz interval between two adjacent wavelengths, and then in Figure 8A, the optical signals output by the SPLITTER are output to an odd channel and an even channel respectively to generate dummy light of 80 wavelengths with a 50GHz interval between two adjacent wavelengths; therefore the number of the dummy light channels is increased and the interval between two adjacent wavelengths is narrowed. In Figure 8B, the optical signals output by the SPLITTER are output to two even channels at the same time to similarly generate two groups of dummy lights of 40 wavelengths with a 100GHz interval between two adjacent waves, and the two groups of dummy lights may be used for performing optical compensation for two groups of service signals.

It can be seen that for the purpose of increasing the number of the dummy light channels, the number of the DEMUX may be one or more, and correspondingly multiple channels of continuous optical signals may be provided for the DEMUX by using the splitting unit.

Figure 9 is a schematic diagram illustrating a structure of an apparatus of optical compensation for a submarine optical cable according to a seventh embodiment of the present invention. In the embodiment, an OA is provided with a 1+1 protection to increase the system reliability.

As shown in Figure 9, two OAs are connected to two DEMUXs outputting dummy light signals via a 2×2 SPLITTER. When one of the two OAs fails, output power of the other OA may be adjusted to ensure the stability of the optical power of the dummy light signals.

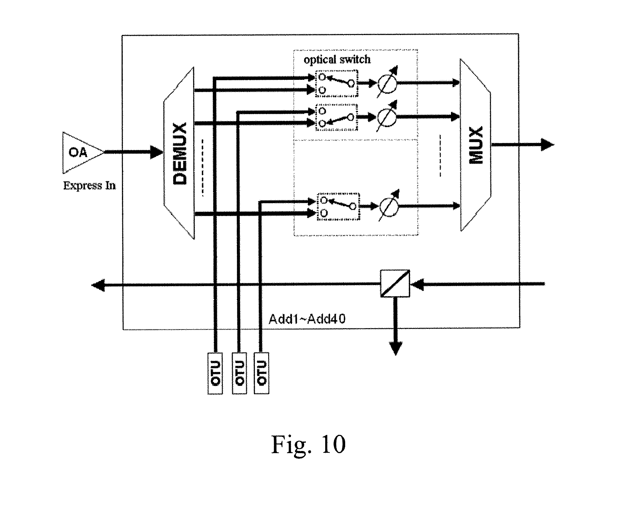

Figure 10 is a schematic diagram illustrating a structure of an apparatus of optical compensation for a submarine optical cable according to an eighth embodiment of the present invention. The apparatus in the embodiment includes one or more channels, and the combining module correspondingly includes one or more switch units, one or more power adjusting units and a combining unit. The switch unit is an optical switch (Switch), the power adjusting unit is a VOA, and the combining unit is an MUX.

As shown in Figure 10, in the embodiment, the dummy light module includes an OA and a DEMUX, and the DEMUX is configured to filter a continuous spectrum output by the OA to generate dummy light signals corresponding to the one or more channels.

The Switch in the combining module is configured to determine an optical signal for a channel corresponding to the Switch by selecting the optical signal from the dummy light signal and the service signal which are both input to the channel.

The VOA in the combining module is configured to control optical power of the optical signal output by the Switch and then outputting the signal.

The MUX in the combining module is configured to combine the one or more optical signals output by the one or more VOAs.

When not all the channels of the DEMUX bear service signals, the Switch selects as required the optical signal corresponding to each channel from the service signal and the dummy light signal, and outputs the selected optical signal to the MUX for combining after power of the optical signal is adjusted by the VOA.

It can be seen that the combining module may perform optical compensation by using the switch unit, and the automatic selection between the dummy light signal and the service signal is implemented by controlling the switch unit, then it is unnecessary to manually manage the single channels; therefore, the optical compensation is performed more quickly and flexibly with a slighter plug loss.

The above-mentioned modules and units may be configured in the same physical entity when the embodiments are applied. For example, they may be configured in a Planar Lightwave Circuit Reconfigurable Optical Add Drop Module (PLC ROADM). As shown in Figure 10, suppose the block in the figure is a PLC ROADM having 40 channels, which includes a DEMUX, Switches, VOAs, an MUX and a Tap Coupler, the OA and the PLC ROADM respectively can function as the dummy light module and the combining module.

The ASE noise light output by the OA is input to an Express In port of the PLC ROADM and the ASE noise light is filtered by the DEMUX to generate 40 optical signals which are output to the Switches as dummy light signals. The service signals output by OTUs are output to the Switches via ports Add1 to Add40 of the PLC ROADM. The Switch may select an optical signal between the dummy light signal and the service signal, and output the selected optical signal to the MUX (if there are 5 service signal, then the Switch selects and outputs 35 dummy light signals), and at the same time each wavelength to be input to the MUX may be pre-equalized by the VOA.

A description of the method of optical compensation for a submarine optical cable in the present invention is given below according to the apparatus of optical compensation for a submarine optical cable shown in Figure 10.

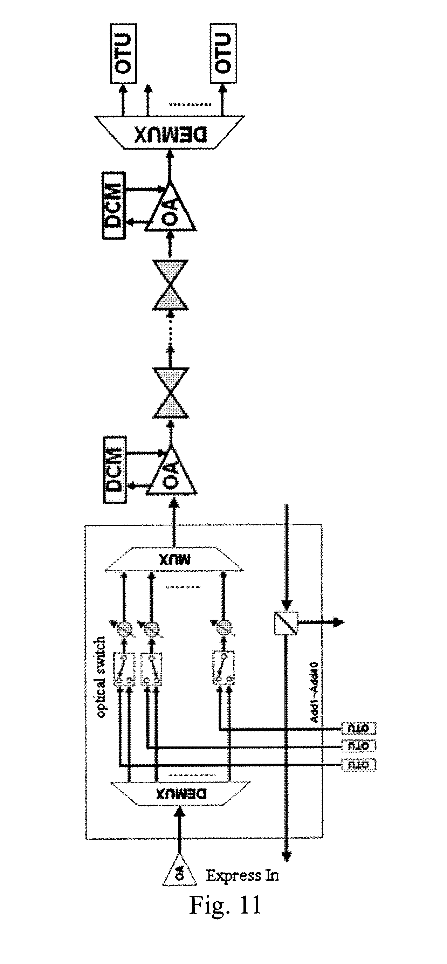

Figure 11 is a schematic diagram illustrating application of a method of optical compensation for a submarine optical cable according to a ninth embodiment of the present invention. In the embodiment, the service signal and the dummy light signal are simultaneously input on each channel, and then an optical signal is selected between the service signal and dummy light signal for each channel, and finally optical signals of all the channels are combined. As shown in Figure 11, the optical signals are selected by the PLC ROADM.

The dummy light signals can be configured and adjusted more effectively and flexibly by selecting the optical signals for each channel. In addition, the power control of the dummy light signals and the service signals can be implemented by using an interface program of the PLC ROADM, and a software program corresponding to the interface program may be stored in a readable storage media such as stored in a Hard Disc or a Compact Disc of a computer, or integrated in a flash memory of a board.

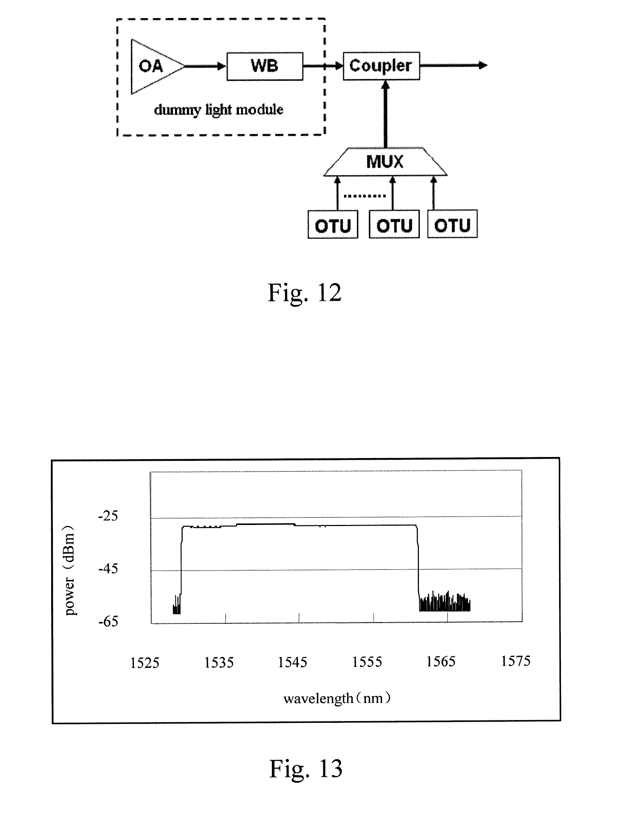

Figure 12 is a schematic diagram illustrating a structure of an apparatus of optical compensation for a submarine optical cable according to a tenth embodiment of the present invention. In the embodiment, the dummy light module includes a continuous spectrum generating unit and a blocking unit. The continuous spectrum generating unit is an OA, the blocking unit is a Wavelength Blocker (WB), and the combining module is a Coupler.

As shown in Figure 12, the apparatus of optical compensation for a submarine optical cable as provided by the embodiment is described below.

The OA is configured to output ASE noise light as a continuous spectrum when an EDF is pumped without any input.

The WB is configured to block a wavelength corresponding to a service signal in the ASE noise light output by the OA to generate a dummy light signal.

The Coupler is configured to combine the service signal with the dummy light signal output by the WB.

In the embodiment, the spectrum of the ASE noise light output by the OA is as shown in Figure 13 which is a continuous spectrum with a transmission bandwidth range of about 40nm. When blocks the wavelength corresponding to the service signal, the WB may also blocks the bandwidth on both sides of the transmission bandwidth, thus the influence of the noise light which is located on both sides of the transmission bandwidth is reduced and the transmission performance of the system is ensured. The spectrum output by the WB after blocking the wavelength corresponding to the service signal is still a continuous spectrum.

In addition, in the embodiment, a plurality of the service signals is input to the Coupler after multiplexed by an MUX and then combined with the dummy light signals.

The action of the WB can be controlled by a program so that the dummy light channels and service channels can be configured automatically, and it is unnecessary to manually manage the single channels; therefore, the operation of the dummy light signals can be performed more quickly and flexibly with a slighter plug loss.

A description of the method of optical compensation of the invention is given below according to the apparatus of optical compensation shown in Figure 12.

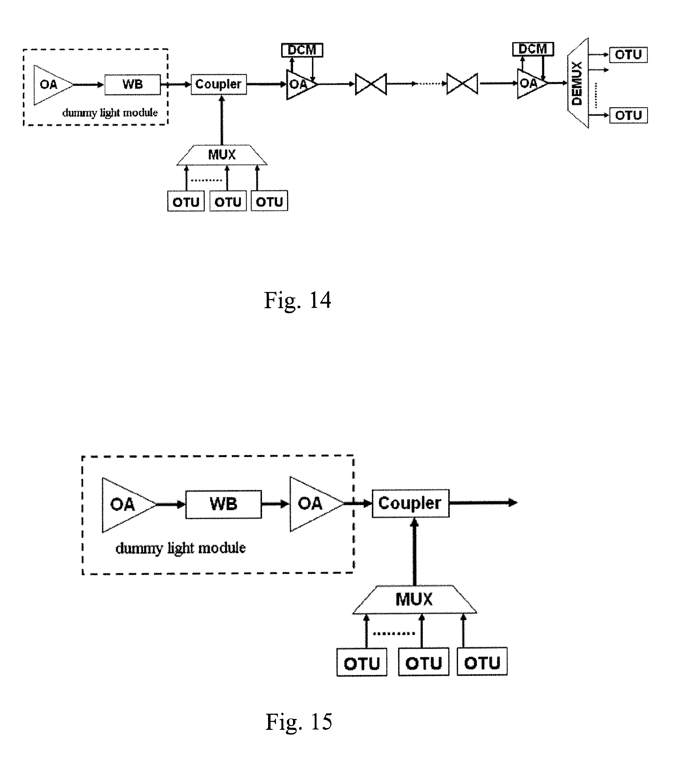

Figure 14 is a schematic diagram illustrating application of a method of optical compensation for a submarine optical cable according to an eleventh embodiment of the present invention. In the embodiment, a continuous dummy light signal is generated by blocking the wavelengths corresponding to the service signals in the continuous spectrum in the predetermined range. As shown in Figure 14, the wavelengths corresponding to the service signals are blocked by WB.

In the embodiment, the power control of the dummy light signals and the service signals can be implement by using the interface program of the WB, and the software program corresponding to the interface program may be stored in a readable storage media such as stored in a Hard Disc or a Compact Disc of a computer, or integrated in a flash memory of a board.

Figure 15 is a schematic diagram illustrating a structure of an apparatus of optical compensation for a submarine optical cable according to a twelfth embodiment of the present invention. On the basis of the embodiment shown in Figure 12, the apparatus further includes a dummy light amplifying unit, i.e. an OA, for amplifying the dummy light signal output by the WB, and outputting the amplified dummy light signal to the combining module.

When the optical power of the dummy light output by the blocking unit can not meet the design requirements, the dummy light is amplified by the added dummy light amplifying unit to make the optical power meet the design requirements.

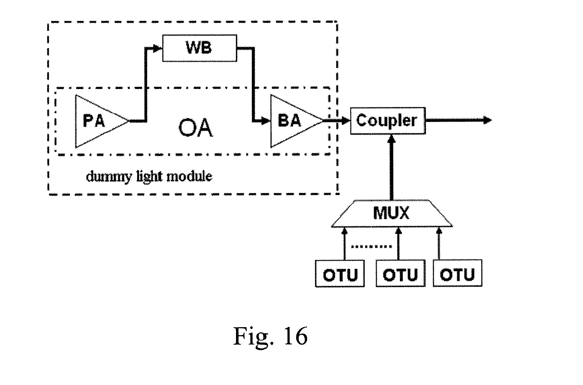

Figure 16 is a schematic diagram illustrating a structure of an apparatus of optical compensation for a submarine optical cable according to a thirteen embodiment of the present invention. In the embodiment, the continuous spectrum generating unit and the blocking unit in the dummy light module are respectively an OA and a WB, and the combining module is a Coupler. Different from the embodiment shown in Figure 12, in this embodiment, the OA includes a Pre-Amplifier (PA) as a first subunit and a Boost Amplifier (BA) as a second subunit, and the WB is inserted to the intermediate stage, i.e. the WB is located between the PA and the BA as shown in Figure 16.

The PA is configured to output ASE noise light as the continuous spectrum when an EDF is pumped without any input.

The WB is configured to block the wavelengths corresponding to the service signals in the ASE noise light output by the PA to generate the dummy light signals.

The BA is configured to amplify the dummy light signals output by the WB.

When the optical power of the dummy light signals output by the blocking unit can not meet the design requirements, the dummy light signals are amplified by the WB which is inserted to the intermediate stage of the OA to make the optical power meet the design requirements.

In the embodiment of the present invention, optical compensation is performed by using a channelized dummy light signal generated according to a continuous spectrum or is performed by using a continuous dummy light signal generated by blocking wavelengths corresponding to service signals; therefore, when dummy light is used for the compensation, the conventional problems are solved, which include complicated control, difficult realization of the pre-equalization function and inflexible configuration.

When the service signals are increased, the adjustment for the power of the dummy light signals is avoided; therefore, the control for the dummy light signals is simplified. In the pre-equalization operation, power control is performed on the dummy light signal in the single channel or the continuous dummy light single; therefore, the realization of the pre-equalization function is easy.

In addition, when the PLC ROADM or the WB is used, the optical compensation can be performed more quickly and flexibly with a slighter plug loss, and the requirement is lower for both of the flatness and the total output power of the ASE noise light for the optical amplifier. Moreover, the dummy light channels and service channels can be configured automatically when the PLC ROADM is used or when the service wavelengths is blocked by using the WB, and it is unnecessary to manually manage and configure the single channel; therefore, the operability is improved.

The above are only exemplary embodiments of the present invention. The protection scope of the present invention, however, is not limited to the above description. Any change or substitution, within the technical scope disclosed by the present invention, easily occurring to those skilled in the art should be covered by the protection scope of the present invention.

## Claims

1. An apparatus of optical compensation for a submarine optical cable, comprising:
a dummy light module, configured to generate a dummy light signal according to a continuous spectrum in a predetermined range; and
a combining module, configured to combine a service signal with the dummy light signal.

2. The apparatus of Claim 1, wherein the dummy light module comprises:
a continuous spectrum generating unit, configured to generate the continuous spectrum in the predetermined range; and
a filtering unit, configured to generate the dummy light signal by filtering the continuous spectrum in the predetermined range.

3. The apparatus of Claim 2, wherein a channel corresponding to the dummy light signal is different from the channel corresponding to the service signal.

4. The apparatus of Claim 3, wherein the continuous spectrum generating unit is an Optical Amplifier, OA, the filtering unit is an optical de-multiplexer, DEMUX, and the combining module is an optical Multiplexer, MUX.

5. The apparatus of Claim 2, wherein the combining module comprises:
at least one switch unit, configured to determine an optical signal for a channel corresponding to the switch unit by selecting the optical signal from the dummy light signal and the service signal which are input to the channel;
at least one power adjusting unit, configured to amplify the optical signal output by the switch unit; and
a combining unit, configured to combine at least one amplified optical signal output by the at least one power adjusting unit.

6. The apparatus of Claim 5, wherein the switch unit is an optical switch, Switch, the power adjusting unit is a Variable Optical Attenuator, VOA, and the combining unit is an MUX.

7. The apparatus of Claims 2, further comprising:
a feedback unit, configured to feed back a predetermined part of the dummy light signal to the continuous spectrum generating unit.

8. The apparatus of Claim 7, wherein the feedback unit is an optical splitter, Tap.

9. The apparatus of Claims 2, wherein the number of the filtering unit is at least two, further comprising:
a splitting unit, configured to split the continuous spectrum in the predetermined range into at least two continuous spectrums, and output the at least two continuous spectrums to the at least two filter units respectively.

10. The apparatus of Claim 1, wherein the dummy light module comprises:
a continuous spectrum generating unit, configured to generate the continuous spectrum in the predetermined range; and
a blocking unit, configured to generate the dummy light signal by blocking a wavelength corresponding to the service signal in the continuous spectrum.

11. The apparatus of Claim 10, wherein the continuous spectrum generating unit is an OA, the blocking unit is a wavelength blocker, WB, and the combining module is a Coupler.

12. The apparatus of Claim 10, further comprising:
a dummy light amplifying unit, configured to amplify the dummy light signal output by the blocking unit.

13. The apparatus of claim 10, wherein the continuous spectrum generating unit comprises
a first subunit, configured to generate the continuous spectrum in the predetermined range to be output to the blocking unit; and
a second subunit, configured to amplify the dummy light signal output by the blocking unit.

14. The apparatus of Claim 13, wherein the first subunit is an optical Pre-Amplifier, PA, and the second subunit is an optical Back-Amplifier, BA.

15. A method of optical compensation for a submarine optical cable, comprising:
generating a dummy light signal according to a continuous spectrum in a predetermined range; and
combining a service signal with the dummy light signal.

16. The method of Claim 15, wherein generating the dummy light signal comprises:
generating the dummy light signal by filtering the continuous spectrum in the predetermined range.

17. The method of Claim 16, wherein combining the service signal with the dummy light signal comprises:
selecting at least one optical signal for at least one channel by selecting the optical signal from the dummy light signal and the service signal which are input to the channel;
amplifying the at least one optical signal; and
combining the at least one amplified optical signal.

18. The method of Claims 16 or 17, further comprising:
feeding back a predetermined part of the multiplexed optical signal.

19. The method of Claim 15, wherein generating the dummy light signal comprises:
generating the dummy light signal by blocking a wavelength corresponding to the service signal in the continuous spectrum in the predetermined range.

20. The method of Claim 19, further comprising:
amplifying the dummy signal before combining the service signal with the dummy light signal.
